# EUROPEAN PATENT APPLICATION

(11) **EP 1 452 420 A1**
(43) Date of publication of application: **01.09.2004**
(21) Application number: 02804342.0
(22) Date of filing: 27.09.2002
(51) Int. Cl.: B62D 5/04, B62D 5/22, B62D 3/12

(54) **ELECTRIC POWER STEERING DEVICE**

(30) Priority: 03.12.2001 JP 2001402292; 19.04.2002 JP 2002117738
(71) Applicant: NSK LTD.,, Shinagawa-ku, Tokyo 141-8560 (JP)
(72) Inventor: ABE, Manabu, c/o NSK Ltd, Maebashi-shi, Gunma 371-0853 (JP); CHIKARAISHI, Kazuo, c/o NSK Ltd, Maebashi-shi, Gunma 371-0853 (JP)
(74) Representative: Baldwin, Mark
(86) International application number: PCT/JP2002/010011
(87) International publication number: WO 2003/047947

(57) **Abstract**

An electric power steering apparatus capable of outputting an auxiliary steering force by an electric motor, includes a support device (20) supporting a rack shaft (10). The rack shaft (10) has support device guide surfaces, i.e., rolling surfaces (10b, 10b) extending in a longitudinal direction in at least two portions on an outer peripheral surface. The support device (20) has cylindrical rollers (23) rolling on the rolling surfaces (10b, 10b) in directions intersecting each other while pressing the rolling surfaces in a case where the rack shaft (10) is viewed in the longitudinal direction. Therefore, the rack shaft (10) can be supported by the cylindrical rollers (23) with a low friction, and the rolling surfaces (10b, 10b) provided on the outer peripheral surface of the rack shaft (10) are pressed by the cylindrical rollers (23), whereby the rack shaft (10) can be supported from two different directions. Hence, an axis of the rack shaft (10) and an axis of a pinion (3) intersect each other at an angle other than 90 degrees, thereby providing a configuration suitable for supporting the rack shaft (10) where a rotational torque occurs when in operation. When depicting directions of pressing forces applied on the rolling surfaces (10b) from the cylindrical rollers (23) respectively with lines, an intersection (K) of these lines is shifted from a center O of the rack shaft (10). It is therefore possible to prevent the rack shaft (10) from rotating and to press rack teeth (10a) against pinion teeth (3a) in a stable state by a resultant force of the pressing forces.

## Description

### Technical Field

The present invention relates generally to an electric power steering apparatus, and more particularly to an electric power steering apparatus including a rack shaft and a pinion.

### Background Arts

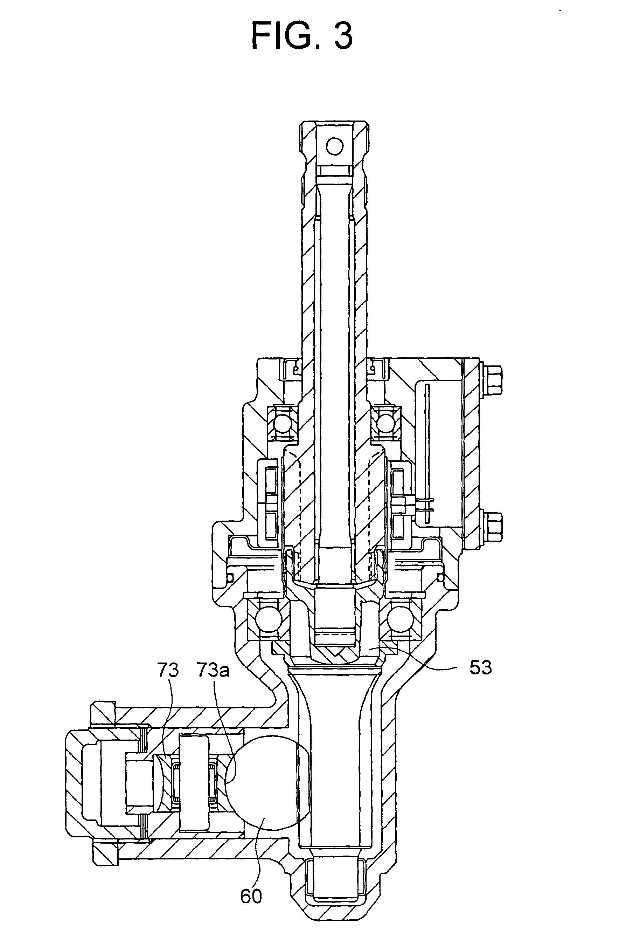

Known as one type of steering apparatus for an automotive vehicle is a rack-and-pinion type steering apparatus in which a rotary force and a quantity of rotations (steering horsepower) of a pinion are converted into a thrust and a stroke in an axial direction of a rack shaft by meshing the pinion with rack teeth of the rack shaft. Herein, an automotive vehicle having a comparatively light car weight takes in some cases a structure that the rack-and-pinion type steering apparatus is incorporated into a so-called manual steering apparatus that does not output an auxiliary steering force. In such a case, a steering wheel must be driven only by steering of a driver, and hence a steering torque is reduced by decreasing a stroke quantity (a stroke ratio) per rotation of the pinion, and, while on the other hand, a steering quantity is set large. Further, in a rack holding mechanism for holding the rack, a holding portion for holding a back face (opposite to a rack tooth surface side) is provide with a rolling type rack guide (in which, as shown in FIG. 3, a circular-arc surface 73a of a single roller 73 is pushed against a cylindrical surface of a back face of a rack shaft 60 so as to ensure an engagement between a pinion 53 and the rack shaft 60) for attaining a rotational support as by the single roller, etc., thus improving a transmission efficiency and reducing the steering torque.

By contrast, an automotive vehicle having a comparative a heavy car weight generally needs being provided with a so-called power steering apparatus that outputs an auxiliary steering force in order to reduce the steering horsepower. Herein, the power steering apparatus is roughly classified into a hydraulic power steering apparatus and an electric power steering apparatus. In the hydraulic power steering apparatus, an oil pressure is generated by a control valve provided on a pinion shaft in accordance with a steering torque applied to the steering wheel on the driver side, and the oil pressure acts on an hydraulic cylinder provided on the rack shaft, thereby generating a thrust directly in a moving direction of the rack shaft. Accordingly, the steering torque applied to the steering wheel by the driver may be small enough for a necessity of operating the control valve. Moreover, a stroke ratio is set larger than in the manual steering apparatus in order to decrease even a steering quantity. Hence, the torque transmitted to the rack shaft through the rack-and-pinion device is extremely small, and therefore, even if the transmission efficiency declines to some extent, the steering of the driver is not hindered. The rack holding mechanism for holding the rack therefore involves the use of a slide type of rack guide less expensive than a rolling type rack guide.

In contrast with the aforementioned type, in the electric power steering apparatus, the auxiliary steering force is outputted by the electric motor to the steering shaft and the rack shaft, corresponding to a steering torque applied to the steering wheel. The electric power steering apparatus exhibits, as compared with the hydraulic power steering apparatus, excellent characteristics such as requiring none of a hydraulic pump, hydraulic piping and an operating oil tank, etc., and having a compact configuration. The electric power steering apparatus was initially adopted for lightweight vehicles such as a lightweight car, etc. and has got applied to vehicles having heavy weights over the recent years. Herein, the electric power steering apparatus is categorized into a so-called column assist type electric power steering apparatus in which the auxiliary steering force is outputted directly to a steering shaft by securing the electric motor to a steering column, and a so-called pinion assist type electric power steering apparatus in which the auxiliary steering force is outputted directly to a pinion shaft by securing the electric motor to a rack-and-pinion device. According to the latter type of electric power steering apparatus, the tremendous force to which the auxiliary steering force of the electric motor is added, is transmitted to between the pinion and rack teeth of the rack shaft.

Moreover, in the vehicle having a comparative heavy weight, the transmission of the tremendous force much greater than those in the manual steering apparatus and the hydraulic power steering apparatus gets steady, and hence there increase a bending stress and a surface pressure acting on the pinion or the rack teeth. As a countermeasure, the bending stress and the surface pressure can be reduced by increasing a pressure angle and an angle of torsion. Particularly in the rack-and-pinion type steering apparatus coming under a variable stroke ratio type in which a stroke ratio is increased in the vicinity of a central portion of the rack teeth but decreased at both side ends thereof, there exists such a tendency that the pressure angle in the vicinity of the central portion of the rack teeth, which exhibits the highest frequency of the use during even normal traveling, becomes still larger.

Herein, if the tremendous force is transmitted to between the pinion and the rack teeth of the rack shaft, there also rises a separating force acting to separate the rack away from the pinion. Moreover, when the pressure angle rises, the separating force described above becomes much larger. For instance, in the case of the manual steering apparatus or the hydraulic power steering apparatus, the pressure angle is generally on the order of 20 degrees. In the electric power steering apparatus, even in the case of applying the rack-and-pinion type steering apparatus of the fixed stroke ratio type, the pressure angle is approximately 30 degrees. In the case of applying the rack-and-pinion type steering apparatus of the variable stroke ratio type, the pressure angle reaches 45 degrees. In a simple calculation, if the same rack thrust is given, in the electric power steering apparatus to which the rack-and-pinion type steering apparatus of the variable stroke ratio type is applied, it receives the separating force that is 2.75 times, given by tan 45°/tan 20° = 2.75 times, as large as that in the manual steering apparatus. In the case of making a comparison with the hydraulic power steering apparatus, supposing that an amplifying rate of the steering torque of a driver through a hydraulic assist be set approximately 10 times, it follows that a separating force, which is extraordinarily 27.5 times given such as 10 X 2.75 = 27.5 times, is received.

If it is assumed that such a separating force is received, a frictional force increases if the slide guide is employed for supporting a back face of the rack shaft, resulting in a decline of a steering force transmission rate. Namely, according to the manual steering apparatus or the hydraulic power steering apparatus, the slide guide suffices for supporting the rack shaft. The electric power steering apparatus, however, requires a rack support device exhibiting a small frictional force, as a substitute for the slide guide.

Further, in the electric power steering apparatus, in addition to the problem derived from the increase in the separating force described above, there arises a problem due to an angle of torsion of the rack teeth of the rack shaft. Namely, if the angle of torsion rises, a rotary force of rotating the rack shaft about the axis thereof increases likewise, thereby inducing inconveniences such as abrasions of the pinion and the rack teeth due to an impingement between the rack teeth and the pinion, a rise in the operation torque, and so on. Especially in the case of the so-called rack assist type electric power steering apparatus in which an electric motor is disposed along a periphery of the rack shaft, and the thrust is given to the rack shaft by use of a ball screw mechanism or the like including a ball screw and a nut, the rack shaft is further twisted by a reactive force of the nut, etc., and the impingement between the rack teeth and the pinion becomes more conspicuous. There is still, however, such a problem that the aforementioned torsion of the rack shaft can not be properly supported by the conventional rolling type rack guide.

### Disclosure of the Invention

It is an object of the present invention, which was devised in view of the problems inherent in the prior arts described above, to provide an electric power steering apparatus capable of attaining a low-friction support by restraining torsion of a rack shaft.

According to a first invention, in an electric power steering apparatus capable of outputting an auxiliary steering force by an electric motor, an improvement is characterized by comprising a housing, a rack shaft having rack teeth and movable with respect to the housing, a pinion having pinion teeth meshing with the rack teeth and transmitting a steering force from a steering wheel to the rack shaft, and a support device provided in the housing and supporting the rack shaft, wherein an axis of the rack shaft and an axis of the pinion intersect each other at an angle other than 90 degrees, the rack shaft includes support device guide surfaces extending in a longitudinal direction in at least two portions on an outer peripheral surface, and the support device includes rolling members rolling on the support device guide surfaces in directions intersecting each other while pressing the support device guide surfaces in a case where the rack shaft is viewed in the longitudinal direction, and, when depicting directions of the pressing forces applied on the support device guide surfaces from the rolling members respectively with lines, an intersection of these lines is shifted from the center of the rack shaft. Therefore, the rack shaft can be supported with a low friction by the rolling members and can also be supported from two different directions by pressing the rolling members against the support device guide surfaces provided on the outer peripheral surface of the rack shaft. Accordingly, as the axis of the rack shaft and the axis of the pinion intersect at the angle other than 90 degrees, the electric power steering apparatus takes a configuration suitable for supporting the rack shaft where a rotational torque occurs when in operation. Further, when depicting the directions of the pressing forces applied on the support device guide surfaces from the rolling members respectively with lines, the intersection of these lines is shifted (offset) from the center of the rack shaft. It is therefore feasible to keep the smooth engagement by hindering the rotation of the rack shaft and to press the rack teeth against the pinion teeth in a stable state by dint of a resultant force of the pressing forces. Note that the axis of the rack shaft connotes a line (which is an axis of an original material in the case of, for example, manufacturing the rack shaft from a cylindrical material) passing through the center of a right-angled section of the rack shaft in the longitudinal direction.

By the way, in the so-called rack assist type electric power steering apparatus of a given type, the rotary force of the electric motor is converted into a thrust in the axial direction of the rack shaft by use of a ball screw and a nut. In the rack assist type electric power steering apparatus of this type, it follows that the rotational torque occurs essentially about the axis of the rack shaft by dint of the reactive force of a rotation of the nut.

In consideration of this point, according to a second invention, in an electric power steering apparatus capable of outputting an auxiliary steering force by an electric motor, an improvement is characterized by comprising a housing, a rack shaft having rack teeth and a screw portion, and movable with respect to the housing, a pinion having pinion teeth meshing with the rack teeth and transmitting a steering force from a steering wheel to the rack shaft, a support device provided in the housing and supporting the rack shaft, and a converting member converting a rotary force of the electric motor into a thrust of the rack shaft by use of a nut screwed to the screw portion, wherein the rack shaft includes support device guide surfaces extending in a longitudinal direction in at least two portions on an outer peripheral surface, and the support device includes rolling members rolling on the support device guide surfaces in directions intersecting each other while pressing the support device guide surfaces in a case where the rack shaft is viewed in the longitudinal direction, and, when depicting directions of the pressing forces applied on the support device guide surfaces from the rolling members respectively with lines, an intersection of these lines is shifted from the center of the rack shaft. Therefore, the rolling members abutting on the support device guide surfaces from the different directions can receive the rotational torque acting about the axis of the rack shaft, which occurs essentially when in operation. Hence, the rack shaft can be properly supported while ensuring a smooth movement of the rack shaft in the axial direction. Namely, unless the shifted rolling members exist, the rotational torque about the axis of the rack shaft can not be received.

Incidentally, as in the first invention described above, if it is considered to provide a plurality of rolling members, an adjustment of the pressing force of pressing the support device guide surface against each rolling member, is needed.

In consideration of this point, according to a third invention, in an electric power steering apparatus capable of outputting an auxiliary steering force by an electric motor, an improvement is characterized by comprising a housing, a rack shaft having rack teeth and movable with respect to the housing, a pinion having pinion teeth meshing with the rack teeth and transmitting a steering force from a steering wheel to the rack shaft, and a support device provided in the housing and supporting the rack shaft, wherein the rack shaft includes support device guide surfaces extending in a longitudinal direction in at least two portions on an outer peripheral surface, and the support device includes rolling members rolling on the support device guide surfaces in directions intersecting each other while pressing the support device guide surfaces in a case where the rack shaft is viewed in the longitudinal direction, a shaft member so sustained as to be swayable around inside the housing and rotatably supporting the rolling member, and biasing means biasing the other side end of the shaft member with the result that the rolling member is pressed against the support device guide surface of the rack shaft. Hence, the biasing means biases only the other side end with a proper pressing force, whereby the rolling member can be pressed against the support device guide surface while allowing the tolling member to sway. It is therefore possible to ensure the smooth operation with a simple configuration.

In particular, the biasing means includes a pressing portion abutting on the other side end of each of the shaft members, and an elastic member elastically biasing the pressing portion. The respective shaft members can be biased at one time by use of, for instance, the single pressing portion. Besides, as the elastic force of the elastic member is employed, the stable biasing force can be supplied even if an abrasion, etc. occurs between the rolling member and the support device guide surface.

Further, preferably, when depicting directions of the pressing forces applied on the support device guide surfaces from the rolling members respectively with lines, an intersection of these lines is shifted from the center of the rack shaft.

### Brief Description of the Drawings

FIGS. 1A and 1B are sectional views showing a rack-and-pinion type steering apparatus according to a first embodiment;
FIG. 2 is a sectional view of the rack-and-pinion type steering apparatus according to a second embodiment;
FIG. 3 is a sectional view of a rack-and-pinion type steering apparatus according to the prior art;
FIG. 4 is a sectional view, with some portions omitted, of a rack assist type electric power steering apparatus in a third embodiment;
FIG. 5 is a sectional view showing the configuration in FIG. 4 in a way that cuts it in the axial direction of an input shaft 202;
FIG. 6 is a sectional view similar to FIG. 5, showing an electric power steering apparatus according to a fourth embodiment;
FIG. 7 is a sectional view similar to FIG. 5, showing an electric power steering apparatus according to a fifth embodiment;
FIG. 8 is a sectional view similar to FIG. 5, showing an electric power steering apparatus according to a sixth embodiment;
FIGS. 9A through 9D are views showing an electric power steering apparatus according to a seventh embodiment;
FIGS. 10A through 10D are views showing an electric power steering apparatus according to an eighth embodiment;
FIG. 11 is a view, similar to FIG. 9A, of the rack-and-pinion type steering apparatus according to a ninth embodiment when applied to the rack assist type electric power steering apparatus; and
FIG. 12 is a sectional view, similar to FIGS. 1A and 1B, showing the ninth embodiment.

### Best Mode for Carrying out the Invention

Embodiments of the present invention will hereinafter be described with reference to the drawings.

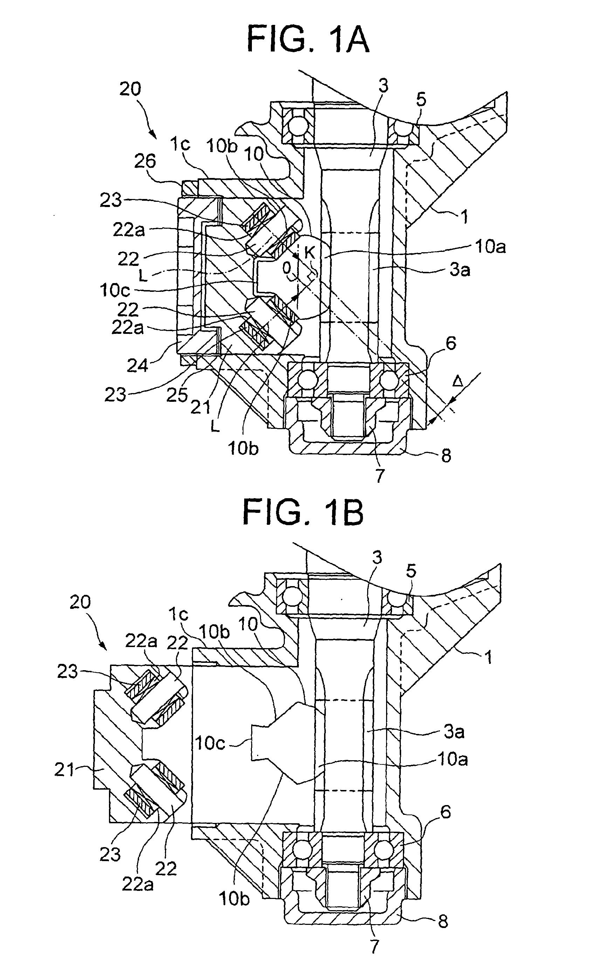

FIGS. 1A and 1B are sectional views showing a rack-and-pinion type steering apparatus according to a first embodiment. FIG. 1A shows a state where a support device is assembled, and FIG. 1B shows a state where the support device is deassembled, wherein the illustrations are given in a way that combines sections of respective portions in an easy-to-understand manner (the similar sections will hereinafter be combined likewise).

In FIGS. 1A and 1B, an output shaft (pinion) 3 extending into a housing 1 is connected to an unillustrated steering shaft and is so supported on bearings 5, 6 as to be rotatable around inside the housing 1. An inner ring of the bearing 6 is fixed through a nut 7 to a side end of the output shaft 3. An outer ring of the bearing 6 is fitted to the housing 1 by screw-fitting of a fixing member 8.

The housing 1 is formed with a hollowed pole portion 1c extending leftwards in FIGS. 1A and 1B from a periphery of a rack shaft 10. A support device 20 is disposed within the hollowed pole portion 1c. The support device 20 is constructed of a main body 21 taking substantially a cylindrical shape, two lengths of shafts 22 attached inside a cap hole of the main body 21, cylindrical rollers 23 defined as rolling members fitted to the respective shafts 22, a screw member 24 for securing the main body 21 to the hollowed pole portion 1c, a disc spring 25, disposed between the screw member 24 and the main body 21, for biasing the main body 21 towards the rack shaft 10, and a lock member 26 for the screw member 24. A compression quantity of the disc spring 25 is changed by adjusting a screw-in quantity of the screw member 24, thereby enabling an adjustment of a pressing force on the rack shaft 10. After the adjustment, the screw member 24 is fixedly locked by the lock member 26, whereby the screw member 24 can be prevented from slackening. Opposite surfaces (which are called back faces) to rack teeth 10a of the rack shaft 10 are notched in their sections at left upper and lower portions in FIG. 1. These notched portions are formed with two pieces of rolling surfaces (which are, i.e., support device guide surfaces extending in a longitudinal direction) 10b, 10b each extending in the longitudinal direction, and a raised portion 10c is formed therebetween. The rolling surfaces 10b, 10b are so disposed as to be symmetrical in section with respect to the center of the rack shaft 10. An axis of the rack shaft 10 intersects an axis of the pinion 3 at an angle other than 90 degrees. Note that the rack shaft 10 is formed with rack teeth 10a by effecting machining and cold forming on a round bar as a material. In the case of a rack assist type electric power steering apparatus, an outer peripheral surface of the round bar as the material is formed with a screw groove (unillustrated). Accordingly, the center of the rack shaft 10 is coincident (concentric) with the center of the round bar or of the screw groove.

The two shafts 22 are disposed in parallel with the rolling surface 10b and perpendicularly to the rack axis, and rotatably sustain the cylindrical rollers 23 through bearings 22a. Bisectors L (each coincident with the direction of the pressing force of the cylindrical roller 23 against the rolling surface 10b) for bisecting the two cylindrical rollers 23 in the axial directions, intersect each other in a position K. The position K is so disposed as to be offset by ? towards the rack teeth 10a from a center O of the rack shaft 10. The bisectors L are herein orthogonal to each other. It is preferable that both of side ends of the cylindrical rollers 23 be subjected to crowning working in order to relieve edge loads upon the rolling surfaces 10b, 10b. The two cylindrical rollers 23 configure a pressing means for pressing the rack shaft 10 to move towards the output shaft 3 from two directions.

An operation of the first embodiment will be explained. When a steering force is applied to an unillustrated steering wheel, the steering force is transmitted to the output shaft 3 via the unillustrated steering shaft. Then, a rotary force of the output shaft 3 is converted into a thrust acting in the longitudinal direction of the rack shaft 10 through the pinion teeth 3a and the rack teeth 10a that mesh with each other. The rack shaft 10 is moved in a vertical direction on the sheet surface by this thrust in the longitudinal direction, whereby unillustrated traveling wheels are turned by steering. At this time, the cylindrical rollers 23 roll on the rolling surfaces 10b and thus allow the rack shaft 10 to move with a low friction.

Herein, when a tremendous force is transmitted to between the output shaft 3 and the rack shaft 10, there occurs a separating force of separating the rack shaft 10 away from the output shaft 3. In the first embodiment, the pair of cylindrical rollers 23 disposed in the symmetric positions with respect to the center of the rack shaft 10, can properly support this separating force. On the other hand, upon the transmission of the tremendous force between the output shaft 3 and the rack shaft 10, there occurs a rotary force of rotating the rack shaft 10 about the center thereof. This rotary force becomes large particularly when the axis of the rack shaft 10 intersects the axis of the pinion 3 at an angle other than 90 degrees. According to the first embodiment, the pair of cylindrical rollers 23 disposed in the symmetric positions with respect to the center of the rack shaft 10, can properly support this rotary force. Note that the bisectors L of the two cylindrical rollers 23 intersect each other at the right angle, and hence an advantage is that the force of pressing one rolling surface 10b does not affect the pressing force between the other rolling surface 10b and the cylindrical roller 23.

Further, in the first embodiment, the position K in which the bisectors L of the two cylindrical rollers 23 intersect each other, is disposed with the offset ? towards the rack teeth 10a from the center O of the rack shaft 10. Therefore, a resultant force thereof presses the rack shaft 10 in a direction of moving towards the output shaft 3, whereby the rack shaft 10 and the output shaft 3 can stably engage with each other.

In accordance with the first embodiment, the main body 21 is detached together with the disc spring 25 by slackening the screw member 24 from the lock member 26 and can thus be, as shown in FIG. 1B, removed integrally with the cylindrical rollers 23 from the left side end of the hollowed pole portion 1c, thereby facilitating the assembly and the deassembly for maintenance.

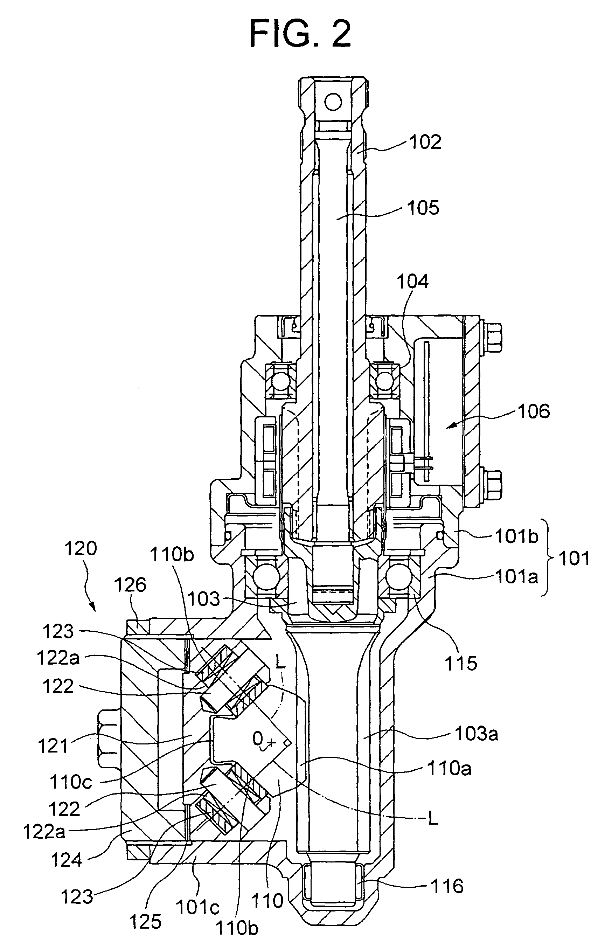

FIG. 2 is a sectional view of the rack-and-pinion type steering apparatus according to a second embodiment when applied to the rack assist type electric power steering apparatus. Referring to FIG. 2, a housing 101 is constructed of a main body 101a and a cover member 101b that are fixed together by use of unillustrated bolts. An input shaft 102 and an output shaft 103 extend within the housing 101. The input shaft 102 is hollowed, and an upper side end, as viewed in FIG. 2, of the input shaft 102 is connected to an unillustrated steering shaft. Further, the steering shaft is connected to an unillustrated steering wheel. The input shaft 102 is so supported on a bearing 104 as to be rotatable around inside the housing 101. An upper side end, as viewed in FIG. 2, of a torsion bar 105 is pin-connected to the input shaft 102, and a lower side end thereof is serration-connected to the output shaft 103. This torsion bar 105 extends through an interior of the input shaft 102.

A torque sensor 106 (only part of the sensor is illustrated) is provided along a periphery of the input shaft 102 on the lower side as viewed in FIG. 2. The torque sensor 106 detects a steering torque from torsion of the torsion bar 105 that gets twisted in proportion to a torque received. This torque sensor 106 detects mechanically (and electromagnetically as well) a relative angular displacement between the input shaft 102 and the output shaft 103, which is based on the torsion of the torsion bar 105. The sensor 106 outputs this relative angular displacement as an electric signal to an unillustrated control circuit.

The output shaft 103 is so supported on bearings 115, 116 as to be rotatable around inside the housing 101, and is formed at its central portion with pinion teeth 103a. The pinion teeth 103a mesh with rack teeth 110a of the rack shaft 110 extending in the vertical direction on the sheet surface. Both side ends of the rack shaft 110 are connected to an unillustrated wheel steering apparatus.

The housing 101 is formed with a hollowed pole portion 101c extending leftwards in FIG. 2 from a periphery of the rack shaft 110. A support device 120 is disposed within the hollowed pole portion 101c. The support device 120 is constructed of a main body 121 taking substantially a cylindrical shape, two lengths of shafts 122 attached inside a cap hole of the main body 121, cylindrical rollers 123 defined as rolling members fitted to the respective shafts 122, a screw member 124 for securing the main body 121 to the hollowed pole portion 101c, a disc spring 125, disposed between the screw member 124 and the main body 121, for biasing the main body 121 towards the rack shaft 110, and a lock member 126 for the screw member 124. A compression quantity of the disc spring 125 is changed by adjusting a screw-in quantity of the screw member 124, thereby enabling an adjustment of a pressing force on the rack shaft 110. After the adjustment, the screw member 124 is fixedly locked by the lock member 126, whereby the screw member 124 can be prevented from slackening. Opposite surfaces (which are called back faces) to rack teeth 110a of the rack shaft 110 are notched in their sections at left upper and lower portions in FIG. 2. These notched portions are formed with two pieces of rolling surfaces (which are, i.e., support device guide surfaces extending in a longitudinal direction) 110b, 110b each extending in the longitudinal direction, and a raised portion 110c is formed therebetween. The rolling surfaces 110b, 110b are so disposed as to be symmetrical in section with respect to the center of the rack shaft 110. An axis of the rack shaft 110 intersects an axis of the pinion 103 at an angle other than 90 degrees. The two shafts 122 are disposed in parallel with the rolling surface 110b and perpendicularly to the rack axis, and rotatably sustain the cylindrical rollers 123 through bearings 122a. A position in which bisectors (not shown) of the two cylindrically rollers 123 intersect each other at the right angle, is offset as in the first embodiment. It is preferable that both of side ends of the cylindrical rollers 123 be subjected to the crowning working in order to relieve edge loads upon the rolling surfaces 110b. The two cylindrical rollers 123 configure a pressing means for pressing the rack shaft 110 to move towards the output shaft 103 from two directions.

An operation of the second embodiment will be discussed. When the steering force is applied to the unillustrated steering wheel, the torque sensor 106 detects the steering torque from a torsion quantity of the torsion bar 105, and it follows that an auxiliary steering force is outputted from an unillustrated electric motor, corresponding to the detected steering torque. Herein, when the steering force is transmitted to the output shaft 103, the rotary force of the output shaft 103 is converted into a thrust acting in the longitudinal direction of the rack shaft 110 through the pinion teeth 103a and the rack teeth 110a that mesh with each other. The rack shaft 110 is moved in the vertical direction on the sheet surface by this thrust in the longitudinal direction, whereby unillustrated traveling wheels are turned by steering. At this time, the cylindrical rollers 123 roll on the rolling surfaces 110b and thus allow the rack shaft 110 to move with the low friction.

As in the first embodiment discussed above, when the tremendous force is transmitted to between the output shaft 103 and the rack shaft 110, there occurs the separating force of separating the rack shaft 110 away from the output shaft 103. In the second embodiment, the pair of cylindrical rollers 123 disposed in the symmetric positions with respect to the center of the rack shaft 110, can properly support this separating force. On the other hand, upon the transmission of the tremendous force between the output shaft 103 and the rack shaft 110, there occurs the rotary force of rotating the rack shaft 110 about the center thereof. This rotary force becomes large particularly when the axis of the rack shaft 110 intersects the axis of the pinion 103 at an angle other than 90 degrees. According to the second embodiment, the pair of cylindrical rollers 123 disposed in the symmetric positions with respect to the center of the rack shaft 110, can properly support this rotary force. Note that the bisectors L of the two cylindrical rollers 123 intersect each other at the right angle, and hence an advantage is that the force of pressing one rolling surface 110b does not affect the pressing force between the other rolling surface 110b and the cylindrical roller 123. Further, in the second embodiment also, the position in which the bisectors of the two cylindrical rollers 123 intersect each other, is disposed with the offset towards the rack teeth 110a from the center of the rack shaft 110. Therefore, a smooth meshing state can be kept by blocking the rotation of the rack shaft. Besides, a resultant force thereof presses the rack shaft 110 in a direction of moving towards the output shaft 103, whereby the rack shaft 110 and the output shaft 103 can stably engage with each other.

By the way, in the first and second embodiments discussed above, the pressing force of the cylindrical rollers 23, 123 against the rolling surfaces 10b, 110b can be adjusted by fastening or slackening the screw members 24, 124 to or from the housings 1, 101 in a way that changes elastic deformation quantities of the disc springs 25, 125. The elastic force based on the elastic deformation quantities of the disc springs 25, 125 causes the main bodies 21, 121 to press the shafts 22, 122, whereby the cylindrical rollers 23, 123 are pressed against the rolling surfaces 10b, 110b.

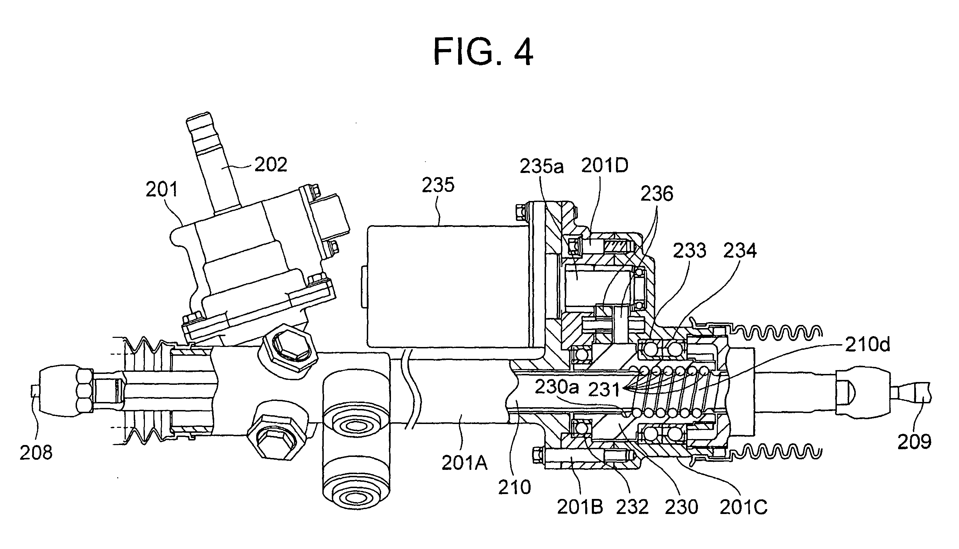

FIG. 4 is a sectional view with some portions omitted, showing the rack assist type electric power steering apparatus according to a third embodiment. Referring to FIG. 4, a cover member 201C is secured by a bolt 201D through a spacer member 201B to a right side end of a rack housing 201A formed integrally with a housing 201. The rack housing 201A is fixed to an unillustrated car body. A rack shaft 210 is inserted into the rack housing 201A and is connected at its both side ends to tie-rods 208, 209. The tie-rods 209, 209 are connected to an unillustrated wheel steering apparatus.

A helical outer screw groove 210d is formed in along an outer periphery of the rack shaft 210 in the vicinity of the right side end in FIG. 4. A cylindrical ball screw nut 230 is disposed along the periphery of the screw groove 210d. The ball screw nut 230 is so supported on a bearing 232 as to be rotatable around the space member 201B and likewise supported on bearings 233, 234 so as to be rotatable around the cover member 201C. A helical inner screw groove 230a is formed in along an inner periphery of the ball screw nut 230. The outer screw groove 210d and the inner screw groove 230a configure a rolling path that accommodates a multiplicity of balls 231 (only part of these balls are illustrated).

The ball 231 has a function to relieve a frictional force caused when the ball screw nut 230 and the rack shaft 210 make relative rotations. Note that the ball screw nut 230 has an unillustrated circulation path through which the balls can be circulated during the rotations of the ball screw nut 230.

Through rollers 236 rolling on an outer peripheral surface of the ball screw nut 230 and on an outer peripheral surface of a rotary shaft 235a of an electric motor 235 attached inside to the rack housing 201A, a rotational torque outputted from the electric motor 235 is transmitted to the ball screw nut 230 by a so-called traction drive system. Note that the rotational torque may also be transmitted not by the traction drive system but by a gear transmission system. The ball screw nut 230 structures a nut, and a conversion member is constructed of the ball screw nut 230 and the rack shaft 210 including the outer screw groove 210d.

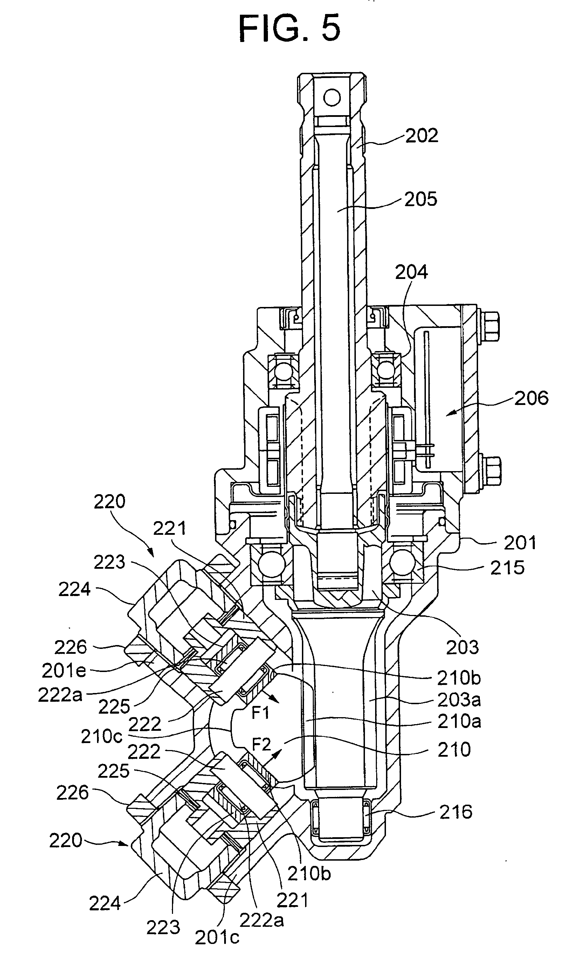

FIG. 5 is a sectional view showing the configuration in FIG. 4 in a way that cuts it in the axial direction of the input shaft 202. Referring to FIG. 5, the input shat 202 and an output shaft 203 extends through an interior of the housing 201. The input shaft 202 is hollowed, and an upper side end, as viewed in FIG. 5, of the input shaft 202 is connected to an unillustrated steering shaft. Further, the steering shaft is connected to an unillustrated steering wheel. The input shaft 202 is so supported on a bearing 204 as to be rotatable around inside the housing 201. An upper side end, as viewed in FIG. 5, of a torsion bar 205 is pin-connected to the input shaft 202, and a lower side end thereof is serration-connected to the output shaft 203. This torsion bar 205 extends through an interior of the input shaft 202.

A torque sensor 206 (only part of the sensor is illustrated) is provided along a periphery of the input shaft 202 on the lower side as viewed in FIG. 5. The torque sensor 206 is the same as the torque sensor in the embodiments discussed above, and hence an in-depth description thereof is omitted.

The output shaft 203 is so supported on bearings 215, 216 as to be rotatable around inside the housing 201, and is formed at its central portion with pinion teeth 203a. The pinion teeth 203a mesh with rack teeth 210a of the rack shaft 210 extending in the vertical direction on the sheet surface. Both side ends of the rack shaft 210 are, as shown in FIG. 4, connected to an unillustrated wheel steering apparatus through tie-rods 208, 209.

The housing 201 is formed, in the lower part in FIG. 5, with a hollowed pole portion 201c extending leftwards downwards in FIG. 5 from a periphery of the rack shaft 210 and with a hollowed pole portion 201e extending leftwards upwards. Support devices 220, 220 having the same construction are disposed within the hollowed pole portions 201c, 201e. Each of the support devices 220 is constructed of a main body 221 taking substantially a cylindrical shape, a shaft 222 attached inside a cap hole of the main body 221, a cylindrical roller 223 defined as a rolling member fitted to the shaft 222, a screw member 224 for securing the main body 221 to the hollowed pole portion 201c or 201e, a disc spring 225, disposed between the screw member 224 and the main body 221, for biasing the main body 221 towards the rack shaft 210, and a lock member 226 for the screw member 224. A compression quantity of the disc spring 225 is changed by adjusting a screw-in quantity of the screw member 224, thereby enabling an adjustment of pressing forces F1, F2 on the rack shaft 110 (the rack shaft 210 displaces up and down in FIG. 5 so as to equilibrate up-and-down directional components of these pressing forces F1, F2, whereby the pressing forces F1, F2 are equalized to each other). After the adjustment, the screw member 224 is fixedly locked by the lock member 226, whereby the screw member 224 can be prevented from slackening.

Opposite surfaces (back faces) to rack teeth 210a of the rack shaft 210 are notched in their sections at left upper and lower portions in FIG. 5. These notched portions are formed with two pieces of rolling surfaces (which are, i.e., support device guide surfaces extending in a longitudinal direction) 210b, 210b each extending in the longitudinal direction, and a raised portion 210c is formed therebetween. The rolling surfaces 210b, 210b are so disposed as to be symmetrical in section with respect to a bisector (which is the horizontal line in FIG. 5) of the rack shaft 210. An axis of the rack shaft 210 intersects an axis of the pinion 203 at an angle other than 90 degrees.

The shaft 222 of each of the support devices 220 is disposed perpendicularly to the rack axis and in parallel with the face-to-face rolling surface 210b, and rotatably sustains the cylindrical roller 223 through a bearing 222a. A position in which bisectors (coincident with the directions of the pressing forces F1, F2) of the two cylindrically rollers 223 intersect each other at the right angle, is offset as in the embodiments discussed above. It is preferable that both of side ends of the cylindrical rollers 223 be subjected to the crowning working in order to relieve edge loads upon the rolling surfaces 210b. The two cylindrical rollers 223 configure a pressing means for pressing the rack shaft 210 to move towards the output shaft 203 from two directions.

According to the third embodiment, the pressing forces F1, F2 of the two cylindrical rollers 223 against the rolling surfaces 210b can be adjusted by fastening or slackening the screw member 224 to or from the housing 210 in a way that changes the elastic deformation quantity of the disc spring 225. In such a case, the directions of the elastic forces of the disc springs 225, 225 are coincident with the directions of the pressing forces F1, F2, and hence all these elastic forces (excluding what is lost for frictions) can be utilized as the pressing forces F1, F2, whereby the support devices 220 can be downsized and reduced in their weights. Further, the rack shaft 210 is supported in the three directions and therefore ensures sufficient support rigidity. Then, the members such as a bush normally employed in the prior arts can be omitted, thereby making the effective use of its space.

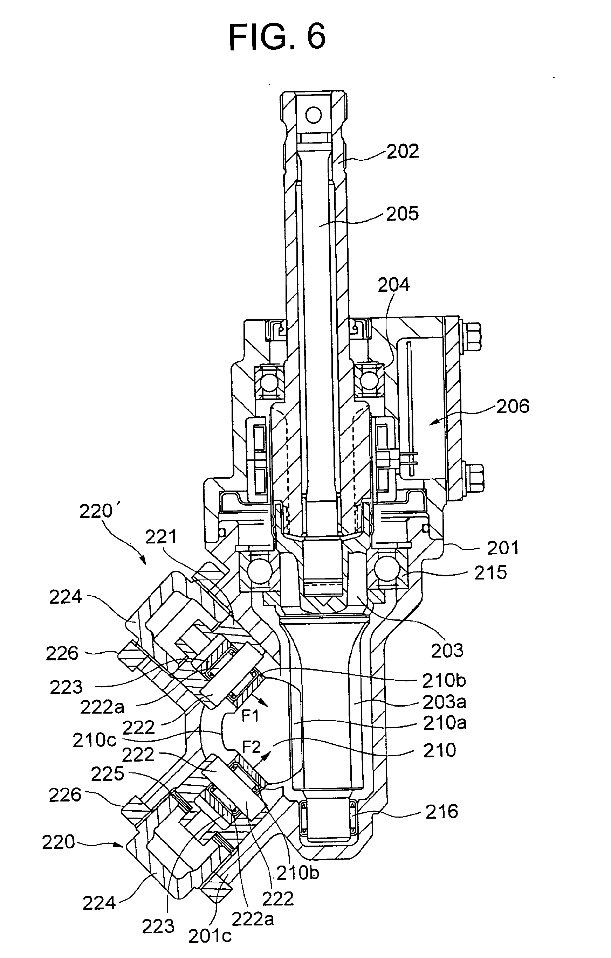

FIG. 6 is a sectional view similar to FIG. 5, showing an electric power steering apparatus according to a fourth embodiment. The fourth embodiment has a slight difference about a configuration of the support device from the third embodiment shown in FIG. 5. Therefore, other common components are marked with the same numerals and symbols, and the repetitive explanations thereof are omitted.

In the fourth embodiment, the support device 220 shown in a lower part in FIG. 6 is the same as that in the third embodiment in FIG. 5. A support device 220' shown in an upper part therein is, the disc spring being omitted, different in terms of only such a point that the screw member 224 directly presses the main body 221. According to the fourth embodiment, the pressing forces F1, F2 of the two cylindrical rollers 223 against the rolling surfaces 210b are, as in the third embodiment in FIG. 5, adjusted by fastening or slackening the screw member 224 to or from the housing 201. If an abrasion occurs on an abutting portion or the like between the screw member 224 of the upper support device 220' and the main body 221, however, the rack shaft 210 is raised upwards in FIG. 6 by a biasing force of the disc spring 225 of the lower support device 220, with the result that a surface pressure between the screw member 224 of the upper support device 220' and the main body 221 is substantially maintained. Therefore, the pressing forces F1, F2 do not get deviated, and the rack shaft 210 can be stably supported for a long period of time.

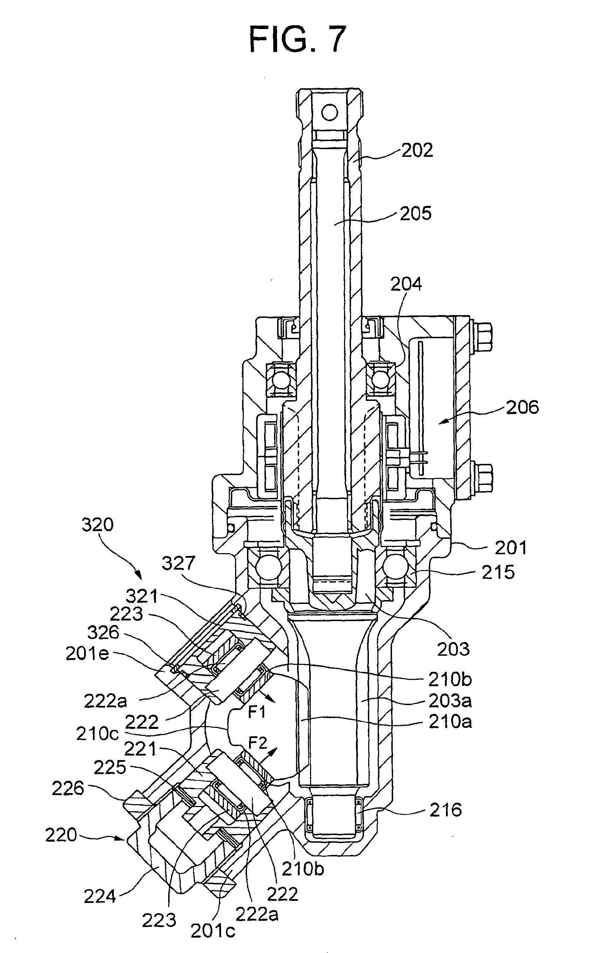

FIG. 7 is a sectional view similar to FIG. 5, showing an electric power steering apparatus according to a fifth embodiment. The fifth embodiment has a difference only about a configuration of the support device from the third embodiment shown in FIG. 5. Therefore, other common components are marked with the same numerals and symbols, and the repetitive explanations thereof are omitted.

In the fifth embodiment, the support device 220 shown in a lower part in FIG. 7 is the same as that in the third embodiment in FIG. 5. An upper support device 320 has, however, a structure in which the mechanism for independently adjusting the pressing force is omitted. To be more specific, the support device 320 is constructed of a main body 321 taking substantially a cylindrical shape that is fixed by a snap ring 326 within the hollowed pole portion 201e, the shaft 222 attached inside a cap hole of a main body 321, and the cylindrical roller 223 defined as a rolling member supported on a bearing 222a so as to be rotatable about the shaft 222. It is to be noted that a gap between the main body 321 and the hollowed pole portion 201e is hermetically sealed by an O-ring 327.

In the fifth embodiment, the pressing forces F1, F2 of the two cylindrical rollers 223 against the rolling surfaces 210b are adjusted by fastening or slackening the screw member 224 of the lower support device 220 to or from the housing 201. In such a case, the rack shaft 210 displaces up and down in FIG. 7, thereby equalizing the pressing forces F1, F2.

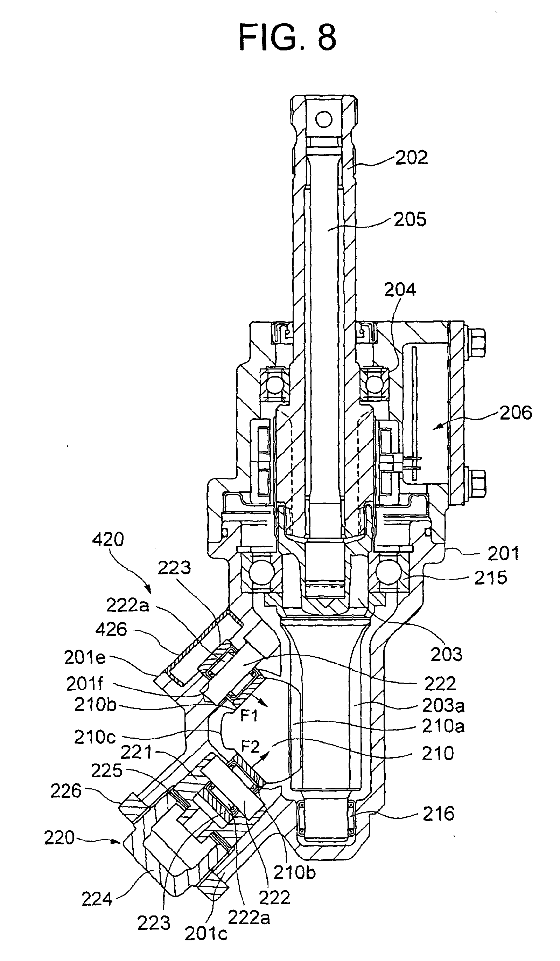

FIG. 8 is a sectional view similar to FIG. 5, showing an electric power steering apparatus according to a sixth embodiment. The sixth embodiment has a difference only about a configuration of the support device from the third embodiment shown in FIG. 5. Therefore, other common components are marked with the same numerals and symbols, and the repetitive explanations thereof are omitted.

In the sixth embodiment, the support device 220 shown in a lower part in FIG. 8 is the same as that in the third embodiment in FIG. 5. An upper support device 420 has, however, a structure in which the cylindrical rollers 223 are fixed. More specifically, the support device 420 is constructed of a shaft 222 inserted into a hole 201f formed in the hollowed pole portion 201e, and of the cylindrical rollers 223 defined as the rolling members so supported on bearings 222a as to be rotatable about the shaft 222. Note that an outer side end of the hollowed pole portion 201e is hermetically sealed by a cover member 426.

In the sixth embodiment also, the pressing forces F1, F2 of the two cylindrical rollers 223 against the rolling surfaces 210b are adjusted by fastening or slackening the screw member 224 of the lower support device 220 to or from the housing 201 in a way that changes the elastic deformation quantity of the disc spring 225. In such a case, the rack shaft 210 displaces up and down in FIG. 8, thereby equalizing the pressing forces F1, F2. Moreover, if abrasions occur on the respective portions due to, e.g., vibrations or the like, the rack shaft 210 is pushed up by the biasing force of the disc spring 225 of the lower support device 220, whereby the pressing forces F1, F2 do not get deviated, and the rack shaft 210 can be stably supported for a long period of time.

By the way, it is required for attaining smooth rolling of the cylindrical roller 223 that the rotary shaft of the cylindrical roller 223 be orthogonal to the rolling direction at a high accuracy. Herein, both of the hollowed pole portions 201c, 201e and the main bodies 221, 321 fitting thereto take the cylindrical shapes, and it is therefore necessary to prevent the rotation of the main body 221 in order to effect positioning of the rotary shaft of the cylindrical roller 223. For attaining the prevention of the rotation, however, it is considered that non-circular internal holes are formed in the hollowed pole portions 201c, 201e which accommodate the cylindrical rollers 223. This is, however, time-consuming and induces a rise in costs. Such being the case, according to a seventh embodiment that follows, as will be explained later on, the prevention of the rotation of the main body 221 is attained (this can be, though not explained, attained with respect to the main body 321 as well).

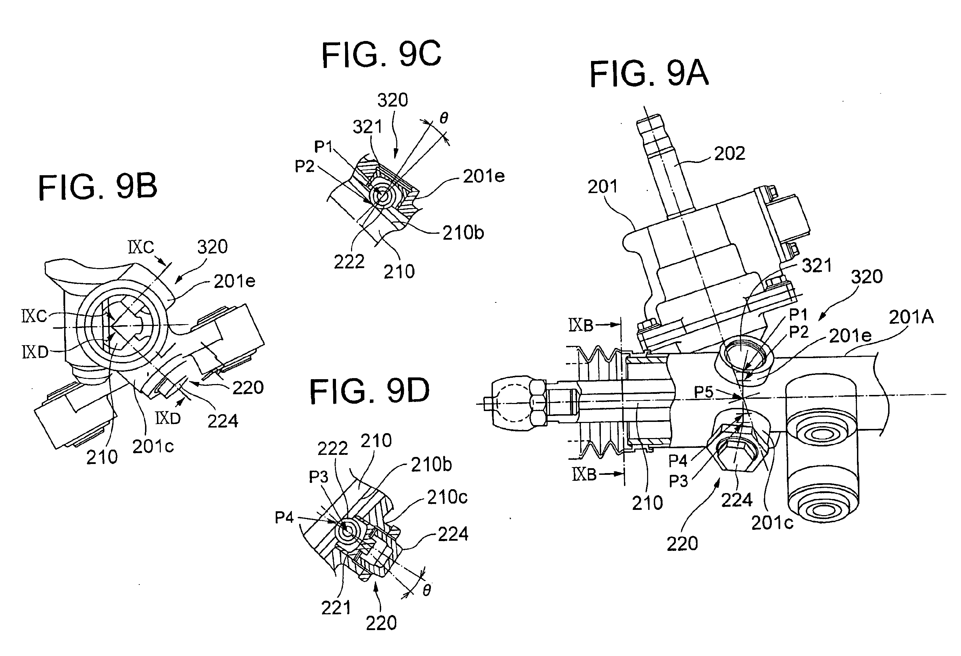

FIG. 9A is a partial sectional view of an electric power steering apparatus according to a seventh embodiment as viewed in the same direction as FIG. 4 shows. FIG. 9B is a view showing the configuration in FIG. 9A in a way that cuts off the configuration along the line IXB-IXB as viewed in an arrowhead-direction. FIG. 9C is a view showing the configuration in FIG. 9B in a way that cuts off the configuration along the line IXC-IXC as viewed in an arrowhead-direction. FIG. 9D is a view showing the configuration in FIG. 9B in a way that cuts off this configuration along the line IXD-IXD as viewed in an arrowhead-direction. The seventh embodiment shown in FIGS. 9A through 9D is what is applied to the fifth embodiment shown in FIG. 7, and therefore the seventh embodiment will be explained with reference to FIGS. 7 and 9A through 9D.

According to the seventh embodiment, a caster angle is given to the two pieces of cylindrical rollers 223. More concretely, an axis of the main body 321 supporting the cylindrical roller 223 of the upper support device 320 in FIG. 9A is, as shown in FIG. 9C, inclined rightwards as viewed in FIG. 9A at an angle ? to the direction orthogonal to the rolling surface 210b of the rack shaft 210. Accordingly, the force by which the main body 321 presses the cylindrical roller 223 is applied via a core center P1 of the cylindrical roller and acts across the rolling surface 210b in a position deviating from a contact center P2 of a contact point between the cylindrical roller 223 and the rolling surface 210b. By making use of this deviation, when the cylindrical roller 223 rolls on the rolling surface 210b, a posture (position) of the cylindrical roller 223 can be autonomously adjusted so that the axis of the cylindrical roller 223 becomes orthogonal to the rolling direction. It is therefore possible to attain the prevention of the rotation of the main body 321 without effecting complicated working and providing different parts.

Similarly, the axis of the main body 221 that supports the cylindrical roller 223 of the lower support device 220 in FIG. 9A is, as shown in FIG. 9D, inclined leftwards as viewed in FIG. 9A at an angle ? to the direction orthogonal to the rolling surface 210b of the rack shaft 210. Hence, the force by which the main body 221 presses the cylindrical roller 223 is applied via a core center P3 of the cylindrical roller and acts across the rolling surface 210b in a position deviating from a contact center P4 of a contact point between the cylindrical roller 223 and the rolling surface 210b. By making use of this deviation, when the cylindrical roller 223 rolls on the rolling surface 210b, the posture of the cylindrical roller 223 can be autonomously adjusted so that the axis of the cylindrical roller 223 becomes orthogonal to the rolling direction. It is therefore feasible to attain the prevention of the rotation of the main body 221 without performing complicated working and providing different parts. Note that the respective parts are disposed so that a central point P5 (FIG. 9A) of the engagement between the pinion teeth 203a (FIG. 7) and the rack teeth 210a, is flush with the points P1 through P4 according to the seventh embodiment.

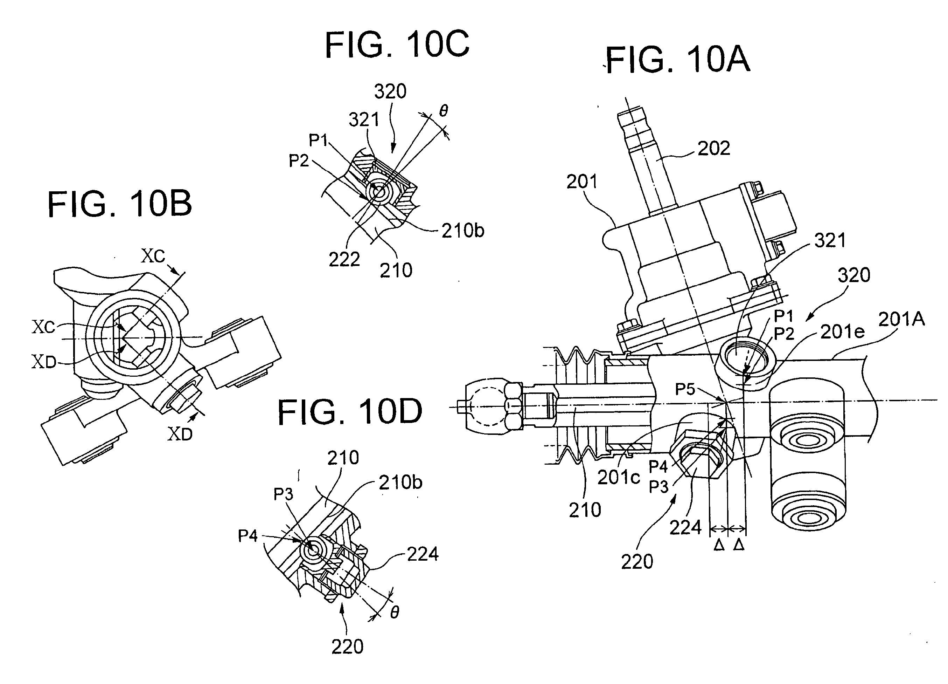

FIG. 10A is a partial sectional view of an electric power steering apparatus according to an eighth embodiment as viewed in the same direction as FIG. 4 shows. FIG. 10B is a view showing the configuration in FIG. 10A in a way that cuts off the configuration along the line XB-XB as viewed in an arrowhead-direction. FIG. 10C is a view showing the configuration in FIG. 10B in a way that cuts off the configuration along the line XC-XC as viewed in an arrowhead-direction. FIG. 10D is a view showing the configuration in FIG. 10B in a way that cuts off this configuration along the line XD-XD as viewed in an arrowhead-direction. The eighth embodiment shown in FIGS. 10A through 10D is what is applied to the fifth embodiment shown in FIG. 7, and therefore the eighth embodiment will be explained with reference to FIGS. 7 and 10A through 10D.

According to the eighth embodiment also, a caster angle is given to the two pieces of cylindrical rollers 223. To be more specific, an axis of the main body 321 supporting the cylindrical roller 223 of the upper support device 320 in FIG. 10A is, as shown in FIG. 10C, inclined rightwards as viewed in FIG. 10A at an angle ? to the direction orthogonal to the rolling surface 210b of the rack shaft 210. Accordingly, the force by which the main body 321 presses the cylindrical roller 223 is applied via the core center P1 of the cylindrical roller and acts across the rolling surface 210b in a position deviating from the contact center P2 of the contact point between the cylindrical roller 223 and the rolling surface 210b. By making use of this deviation, when the cylindrical roller 223 rolls on the rolling surface 210b, the posture of the cylindrical roller 223 can be autonomously adjusted so that the axis of the cylindrical roller 223 becomes orthogonal to the rolling direction. It is therefore possible to attain the prevention of the rotation of the main body 321 without effecting complicated working and providing different parts.

Similarly, the axis of the main body 221 that supports the cylindrical roller 223 of the lower support device 220 in FIG. 10A is, as shown in FIG. 10D, inclined leftwards as viewed in FIG. 10A at an angle ? to the direction orthogonal to the rolling surface 210b of the rack shaft 210. Hence, the force by which the main body 221 presses the cylindrical roller 223 is applied via the core center P3 of the cylindrical roller and acts across the rolling surface 210b in a position deviating from the contact center P4 of the contact point between the cylindrical roller 223 and the rolling surface 210b. By making use of this deviation, when the cylindrical roller 223 rolls on the rolling surface 210b, the posture of the cylindrical roller 223 can be autonomously adjusted so that the axis of the cylindrical roller 223 becomes orthogonal to the rolling direction. It is therefore feasible to attain the prevention of the rotation of the main body 221 without performing complicated working and providing different parts. Note that the respective parts are disposed so that the points P1, P2 and the points P3, P4 are shifted by a distance ? respectively from the central point P5 (FIG. 10A) of the engagement between the pinion teeth 203a (FIG. 7) and the rack teeth 210a according to the eighth embodiment.

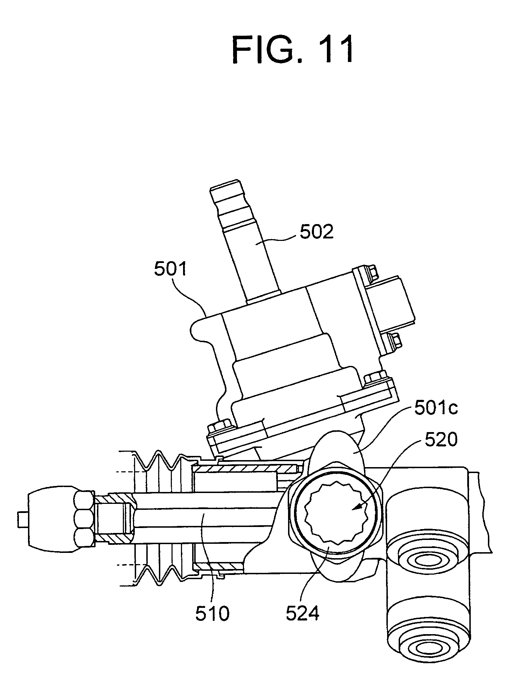

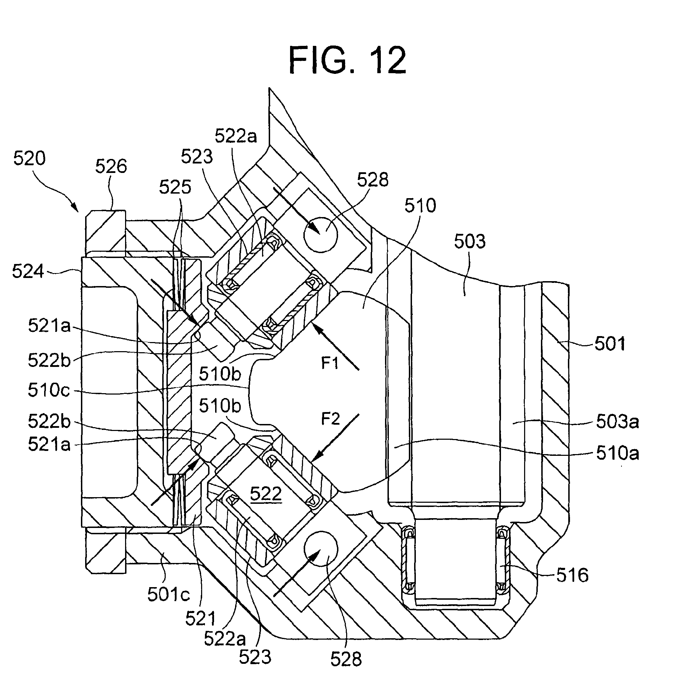

FIG. 11 is a view, similar to FIG. 9A, of the rack-and-pinion type steering apparatus according to a ninth embodiment when applied to the rack assist type electric power steering apparatus. FIG. 12 is a sectional view, similar to FIGS. 1A and 1B, showing the ninth embodiment. Referring to FIG. 11, a partially-illustrated output shaft 503 extends within a housing 501 in the vertical direction in FIG. 11, and is rotatably supported on a bearing 516.

The output shaft 503 is formed at its central portion with pinion teeth 503a. The pinion teeth 503a mesh with rack teeth 510a of the rack shaft 510 extending in the vertical direction on the sheet surface. Both side ends of the rack shaft 510 are connected to an unillustrated wheel steering apparatus.

The housing 501 is formed with a hollowed pole portion 501c extending leftwards in FIG. 12 from a periphery of the rack shaft 510. A support device 520 is disposed within the hollowed pole portion 501c. The support device 520 is constructed of a main body 521 taking substantially a cylindrical shape, two lengths of rocking shafts 522 as shaft members of which one side ends are so supported as to be swayable, cylindrical rollers 523 defined as rolling members so supported on bearings 522a as to be rotatable about the respective rocking shafts 522, a screw member 524 for securing the main body 521 to the hollowed pole portion 501c, a disc spring 525 disposed between the screw member 524 and the main body 521 and serving as an elastic member for biasing the main body 521 towards the rack shaft 510, and a lock member 526 for the screw member 524.

It is preferable that the two rocking shafts 522 be disposed in parallel with rolling surfaces 510b in an assembled state. At this time, a position in which bisectors (not shown) of the two cylindrically rollers 523 intersect each other at the right angle, is offset as in the first embodiment. It is preferable that both of side ends of the cylindrical rollers 523 be subjected to the crowning working in order to relieve edge loads upon the rolling surfaces 510b. The two cylindrical rollers 523 configure a pressing means for pressing the rack shaft 510 to move towards the output shaft 503 from two directions.

In the ninth embodiment, a free side end portion 522b as the other side end of the rocking shaft 522 is formed in a spherical shape and abuts on a truncated cone surface 521a serving as a pressing portion of the main body 521. Note that the rocking shaft 522 is inserted into the interior from an aperture end (to which the screw member 524 is screwed) of the hollowed pole portion 501c and then fitted thereto. The main body 521, the disc spring 525 and the screw member 524 configure a biasing means.

In the ninth embodiment, the pressing forces F1, F2 of the two cylindrical rollers 523 against the rolling surfaces (the support device guide surfaces) 510b can be adjusted by fastening or slackening the screw member 524 of the lower support device 520 to or from the housing 501 in a way that changes the elastic deformation quantity of the disc spring 525. In such a case, the main body 521 moves rightwards (that is substantially equal to a direction in which to bisect an angle made by normal lines of the rolling surfaces 510b) in FIG. 12 on the basis of the biasing force of the disc spring 525. Then, the truncated cone surface 521a presses the free side end portion 522b of the rocking shaft 522. The two rocking shafts 522 sway about pins 528 in directions opposite to each other, thereby enabling the pressing forces F1, F2 of the two cylindrical rollers 523 against the rolling surfaces 510b to be adjusted equally and properly. Moreover, if abrasions occur on the respective portions due to, e.g., vibrations or the like, the biasing force of the disc spring 525 of the support device 520 causes the two rocking shafts 522 to sway simultaneously, whereby the pressing forces F1, F2 do not get deviated, and the rack shaft 510 can be stably supported for a long period of time. It should be noted that the free side end portion 522b takes the spherical shape, since a line tangential to the free side end portion 522b on the truncated cone surface 521a is substantially parallel with the axis of the rocking shaft 522, even when the rocking shaft 522 sways, an unnecessary component force (which, i.e., does not contribute to the pressing of the cylindrical roller 523) generated from this sway is slight, and it does not happen that the edge load is applied on the truncated cone surface 521a.

According to the ninth embodiment, as shown in FIG. 11, the support device 520 can be downsized to the same degree as the sizes of the configurations in FIGS. 1A, 1B and 2. Further, there is an advantage that the pressing force can be adjusted simply by the screwing motion of the single screw member 524. In the embodiments discussed above, the main bodies 221, 521 constitute holding members.

The present invention has been discussed so far in depth by way of the embodiments. The present invention should not be, however, construed within a range limited to the embodiments described above, and can be, as a matter of course, properly changed and improved within a scope that does not depart from the gist of the invention. For example, the pressing forces of the pressing portions may act in three or more directions. Further, the present invention is, without being confined to the variable stroke ratio type electric power steering apparatus, suited to a fixed stroke ratio type electric power steering apparatus, a column assist type electric power steering apparatus, a pinion assist type electric power steering apparatus or a rack assist type electric power steering apparatus.

## Claims

1. An electric power steering apparatus capable of outputting an auxiliary steering force by an electric motor, comprising:
a housing;
a rack shaft having rack teeth and movable with respect to said housing;
a pinion having pinion teeth meshing with the rack teeth and transmitting a steering force from a steering wheel to said rack shaft; and
a support device provided in said housing and supporting said rack shaft,
wherein an axis of said rack shaft and an axis of said pinion intersect each other at an angle other than 90 degrees,
said rack shaft includes support device guide surfaces extending in a longitudinal direction in at least two portions on an outer peripheral surface, and
said support device includes rolling members rolling on the support device guide surfaces in directions intersecting each other while pressing the support device guide surfaces in a case where said rack shaft is viewed in the longitudinal direction, and, when depicting directions of the pressing forces applied on the support device guide surfaces from said rolling members respectively with lines, an intersection of these lines is shifted from the center of said rack shaft.

2. An electric power steering apparatus capable of outputting an auxiliary steering force by an electric motor, comprising:
a housing;
a rack shaft having rack teeth and a screw portion, and movable with respect to said housing;
a pinion having pinion teeth meshing with the rack teeth and transmitting a steering force from a steering wheel to said rack shaft;
a support device provided in said housing and supporting said rack shaft; and
a converting member converting a rotary force of said electric motor into a thrust of said rack shaft by use of a nut screwed to the screw portion,
wherein said rack shaft includes support device guide surfaces extending in a longitudinal direction in at least two portions on an outer peripheral surface, and
said support device includes rolling members rolling on the support device guide surfaces in directions intersecting each other while pressing the support device guide surfaces in a case where said rack shaft is viewed in the longitudinal direction, and, when depicting directions of the pressing forces applied on the support device guide surfaces from said rolling members respectively with lines, an intersection of these lines is shifted from the center of said rack shaft.

3. An electric power steering apparatus capable of outputting an auxiliary steering force by an electric motor, comprising:
a housing;
a rack shaft having rack teeth and movable with respect to said housing;
a pinion having pinion teeth meshing with the rack teeth and transmitting a steering force from a steering wheel to said rack shaft; and
a support device provided in said housing and supporting said rack shaft,
wherein said rack shaft includes support device guide surfaces extending in a longitudinal direction in at least two portions on an outer peripheral surface, and
said support device includes rolling members rolling on the support device guide surfaces in directions intersecting each other while pressing the support device guide surfaces in a case where said rack shaft is viewed in the longitudinal direction, a shaft member so sustained as to be swayable around inside said housing and rotatably supporting said rolling member, and biasing means biasing the other side end of said shaft member with the result that said rolling member is pressed against the support device guide surface of said rack shaft.

4. An electric power steering apparatus according claim 3, wherein said biasing means includes a pressing portion abutting on the other side end of each of said shaft members, and an elastic member elastically biasing the pressing portion.

5. An electric power steering apparatus according claim 3 or 4, wherein when depicting directions of the pressing forces applied on the support device guide surfaces from said rolling members respectively with lines, an intersection of these lines is shifted from the center of said rack shaft.
